(19) Europäisches Patentamt
European Patent Office
Office européen des brevets

(11) **EP 3 219 598 B1**

(12) **EUROPÄISCHE PATENTSCHRIFT**

(45) Veröffentlichungstag und Bekanntmachung des Hinweises auf die Patenterteilung:
**16.12.2020 Patentblatt 2020/51**

(51) Int Cl.:
*B62M 6/45* (2010.01)  *B62M 6/65* (2010.01)
*B62M 6/50* (2010.01)

(21) Anmeldenummer: **17150953.2**

(22) Anmeldetag: **11.01.2017**

(54) **FAHRBETRIEBSUNTERSTÜTZUNGSSYSTEM UND FAHRZEUG**

DRIVE SUPPORT SYSTEM AND VEHICLE

SYSTÈME D'AIDE À LA CONDUITE ET VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2016 DE 102016204119**

(43) Veröffentlichungstag der Anmeldung:
**20.09.2017 Patentblatt 2017/38**

(73) Patentinhaber: **Robert Bosch GmbH**
**70442 Stuttgart (DE)**

(72) Erfinder:
• **Widmaier, Georg**
**71296 Heimsheim (DE)**
• **Schock, Wolfram**
**72770 Ohmenhausen (DE)**
• **Wienss, Andreas**
**72800 Eningen Unter Achalm (DE)**

(56) Entgegenhaltungen:
EP-A1- 2 218 635      EP-A1- 2 650 202
DE-A1-102011 082 086  DE-A1-102011 083 980
DE-A1-102013 217 885  DE-A1-102014 218 681
DE-U1-202014 008 870  GB-A- 591 470
US-A- 3 921 741

EP 3 219 598 B1

## Beschreibung

Stand der Technik

Die vorliegende Erfindung betrifft ein Fahrbetriebsunterstützungssystem und ein Fahrzeug. Die vorliegende Erfindung betrifft insbesondere ein Fahrbetriebsunterstützungssystem für ein mit Muskelkraft und/oder mit Motorkraft antreibbares Fahrzeug sowie ein mit Muskelkraft und/oder mit Motorkraft antreibbares Fahrzeug, insbesondere ein Elektrofahrrad, ein eBike, ein Pedelec oder dergleichen.

Im Bereich der Freizeit- und Sportfahrzeuge und insbesondere bei Fahrrädern wurden unterschiedliche Entwicklungen aufgegriffen, um durch technische Mittel Aspekte der Fahrdynamik einerseits und der Sicherheit andererseits neu zu gestalten und zu verbessern. So wurden zur Verbesserung der Fahrdynamik neue Getriebe- und Schaltungstechniken oder auch Zusatzantriebe eingeführt. Im Hinblick auf Sicherheitsaspekte wurden modifizierte Bremskonzepte aufgegriffen. So zeigt z.B. die DE1020110082086 ein Fahrrad mit elektrischem Unterstützungsmotor, dessen Steuereinheit den Generator/ Motor an die Fahrbahneigenschaften anpasst. Mehrere Sensoren erfassen die Fahrbahnbeschaffenheit, Feuchtigkeit des Belags oder auch den Lenkwinkel des Fahrrades um die Leistung und das Drehmoment inklusive Rekuperation beim Bremsen an den erfassten Fahrstreckenverlauf anzupassen. Dadurch wird ein energieeffizientes Radfahren ermöglicht.

Diese Maßnahmen können jedoch in Kombination miteinander Situationen, in welchen ein oder mehrere Räder eines jeweiligen Fahrzeuges in einen Zustand mit unzureichender Haftung am Untergrund geraten, nicht in befriedigender Art und Weise vermeiden.

Offenbarung der Erfindung

Das erfindungsgemäße Fahrbetriebsunterstützungssystem mit den Merkmalen des unabhängigen Anspruchs 1 weist demgegenüber den Vorteil auf, dass in direkter Art und Weise auf ein Rad eines zu Grunde liegenden Fahrzeuges Einfluss genommen werden kann, um dadurch eine umfassendere Kontrolle des Fahrzustandes des Rades zu gewährleisten. Dies wird erfindungsgemäß mit den Merkmalen des unabhängigen Anspruchs 1 dadurch erreicht, dass ein Fahrbetriebsunterstützungssystem für ein mit Muskelkraft und/oder mit Motorkraft antreibbares Fahrzeug geschaffen wird, wie ein Elektrofahrrad, eBike, oder Pedelec, welches mindestens ein Vorderrad aufweist und welches mit einer steuerbaren elektrischen Generator-Motoreinheit ausgebildet ist, welche an oder im Bereich einer Nabe des Rades montierbar ist und welche mit dem Rad und/oder mit einer Drehung des Rades derart koppelbar ist, dass dadurch die Drehung des Rades durch Bremsen und/oder Beschleunigen beeinflussbar ist. Erfindungsgemäß stellt das Fahrbetriebsunterstützungssystem also z.B. zusätzlich zu einem Antrieb des Fahrzeuges über Muskelkraft und/oder über Motorkraft durch das Vorsehen einer steuerbaren elektrische Generator-Motoreinheit eine zusätzliche Maßnahme bereit, auf die Drehung eines Rades direkt über die Nabe des Rades, Einfluss zu nehmen. Durch die unmittelbare Anordnung im Bereich der Nabe des Rades lässt sich der Fahrzustand des jeweiligen Rades auf einfache und zuverlässige Art überwachen und/oder ändern. Wie im Anspruch 1 gefordert bezieht sich auch in der folgenden Beschreibung das Merkmal das Rad erfindungsgemäss auf das Vorderrad des Fahrzeugs

Die Unteransprüche zeigen bevorzugte Weiterbildungen der Erfindung.

Bei dem erfindungsgemäßen Fahrbetriebsunterstützungssystem ist die Generator-Motoreinheit durch das Rad steuerbar antreibbar, um dadurch in einem Generatorbetrieb Energie aus einer Drehung des Rades auszukoppeln, als Bremse zu wirken, eine Drehung des Rades zu unterdrücken, deren Beschleunigung zu verhindern und/oder abzubremsen. Auf diese Art und Weise können der Führer oder Fahrer des Fahrzeuges und/oder ein dem Fahrzeug zu Grunde liegendes Bremssystem unterstützt werden. Auch kann daran gedacht werden, den Fahrer durch ein Bremsen im Notfall beim Vermeiden einer Gefahrensituation zu unterstützen. So kann ein Bremsen automatisch bereits unter solchen Umständen erfolgen, die vom Führer des Fahrzeugs noch nicht als Gefahrensituation wahrgenommen werden. Dies erhöht die Sicherheit des Betriebs und der Benutzung des zu Grunde liegenden Fahrzeuges.

Dabei bieten sich verschiedene Möglichkeiten an, mit der aus der Bewegung des zu beeinflussenden Rades auszukoppelnden Energie umzugehen. So ist es gemäß dem erfindungsgemäßen

Fahrbetriebsunterstützungssystem vorgesehen, dass die Generator-Motoreinheit z.B. unter Kurzschluss und insbesondere nach Art eines Brakechoppers betreibbar ist. Bevorzugt ist die ausgekoppelte Energie als rückgewonnene Energie bereitzustellen und ggf. zu speichern.

Insbesondere der Aspekt der Rückgewinnung von Energie bietet sich im Zusammenhang mit der Nutzung dieser Energie für den Betrieb des Fahrbetriebsunterstützungssystems selbst und/oder für einen elektrischen Antrieb des zu Grunde liegenden Fahrzeugs an.

Zusätzlich zum Auskoppeln von Energie im Zusammenhang mit einem Verzögern der Drehung eines Rades ist es gemäß dem erfindungsgemäßen Fahrbetriebsunterstützungssystem vorgesehen, dass durch die Generator-Motoreinheit das Rad steuerbar antreibbar ist, um dadurch in einem Motorbetrieb Energie in eine Drehung des Rades einzukoppeln, als Antrieb zu wirken und eine Drehung des Rades in Gang zu setzen, aufrecht zu erhalten und/oder zu beschleunigen. Auf diese Weise kann durch in Gang setzen, Aufrechterhalten oder Beschleunigen der Drehung eines Rades zum Beispiel auch eine Gefahrensituation vermieden werden. Der kann Fahrer dabei unterstützt werden, mit dem Vorderrad ein Hindernis zu überwinden, zum Beispiel einen Bordstein oder - bei Benutzung im Gelände - eine Wurzel, einen Stein oder dergleichen, oder einer zu starken Bremsung entgegenzuwirken.

Um diese Zielsetzungen erreichen zu können, ist es bei einer vorteilhaften Ausgestaltungsform des erfindungsgemäßen Fahrbetriebsunterstützungssystems vorgesehen, dass die Generator-Motoreinheit ausgebildet ist, eine Drehung des Rades so anzupassen, dass Werte (i) der Radgeschwindigkeit vv in Relation zu einer Fahrzeuggeschwindigkeit $V_F$, (ii) der Haftreibungszahl $\mu_{HF}$ und/oder (iii) des Bremsschlupfes $\lambda_B$ des Rades in einem jeweiligen vorbestimmten Werteintervall liegen, dass ein Blockieren und/oder Rutschen des Rades vermieden werden.

Zusätzlich oder alternativ kann es bei einer anderen vorteilhaften Ausgestaltungsform des erfindungsgemäßen Fahrbetriebsunterstützungssystems vorgesehen sein, dass eine jeweilige Generator-Motoreinheit ausgebildet ist und Mittel aufweist, eine Drehzahl des mit der Generator-Motoreinheit gekoppelten Rades zu bestimmen. Einerseits können die bestimmten Drehzahlwerte benutzt werden, um den Betrieb des Fahrbetriebsunterstützungssystems zu steuern, zum Beispiel im Sinne einer Antiblockier-/Antischlupfregelung (ABS-/ASR-Regelung) oder dergleichen. Andererseits kann durch die Verwendung der mit der Generator-Motoreinheit bestimmten Drehzahlen ein sonst zusätzlich vorzusehender Drehzahlsensor entfallen. Dadurch ergibt sich eine Einsparung an Baukomponenten.

Bei einer anderen vorteilhaften Weiterbildung des erfindungsgemäßen Fahrbetriebsunterstützungssystems weist dieses eine Steuereinrichtung auf, welche zur Steuerung des Betriebs der Generator-Motoreinheit ausgebildet ist, insbesondere nach Art oder als Teil einer ABS-, ASR- und/oder RLM-Regelung (Rear-wheel-Lift-off-Mitigation-Regelung) und/oder im Zusammenwirken mit einem Antrieb, mit einem Bremssystem und/oder mit Sensoreinrichtungen des zu Grunde liegenden Fahrzeuges. Auf diese Weise ergibt sich die Möglichkeit der automatischen Integration eines Fahrdynamik- und Sicherheitskonzepts für den Betrieb des zu Grunde liegenden Fahrzeuges.

Ferner betrifft die vorliegende Erfindung ein mit Muskelkraft und/oder zusätzlich mit Motorkraft antreibbares Fahrzeug, ein Elektrofahrrad, ein eBike, oder ein Pedelec. Das erfindungsgemäße Fahrzeug weist mindestens ein Vorderrad auf und ist mit einem erfindungsgemäßen Fahrbetriebsunterstützungssystem ausgestattet.

Entsprechend ist bei einer Ausführungsform des erfindungsgemäßen Fahrzeuges an oder im Bereich einer Nabe des Rades eine steuerbare elektrische Generator-Motoreinheit ausgebildet, welche mit dem Rad und/oder mit einer Drehung des Rades derart koppelbar ist, dass dadurch die Drehung des Rades durch Bremsen und/oder Beschleunigen beeinflussbar ist.

Kurzbeschreibung der Figuren

Unter Bezugnahme auf die beigefügten Figuren werden Ausführungsformen der Erfindung im Detail beschrieben.

| | |
|---|---|
| Figur 1 | ist eine schematische Darstellung für ein Beispiel eines Fahrzeuges nach Art eines Elektrofahrrades, bei welchem eine erste Ausführungsform der Erfindung realisiert ist. |
| Figur 2 bis 4 | zeigen in schematischer Seitenansicht andere Ausführungsformen des erfindungsgemäßen Fahrzeuges. |
| Figur 5 | ist eine grafische Darstellung zur Erläuterung von grundlegenden Aspekten einer ABS-/ASR-Regelung. |
| Figuren 6 und 7 | zeigen Flussdiagramme zur Erläuterung von Steuermechanismen im Hinblick auf Ausführungsformen des erfindungsgemäßen Fahrbetriebsunterstützungssystems. |

Bevorzugte Ausführungsformen der Erfindung

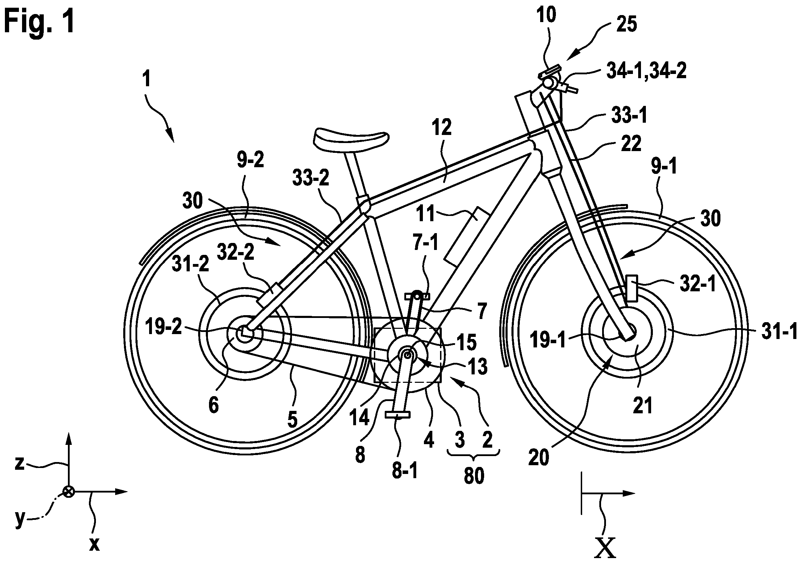

Nachfolgend werden unter Bezugnahme auf die Figuren 1 bis 7 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form von einander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist bei dieser Ausführungsform des erfindungsgemäßen Fahrzeuges 1 in den Kurbeltrieb 2 integriert. Am Hinterrad 9-2 kann eine Gangschaltung 6 angeordnet sein.

Ein Antriebsmoment, welches durch den Fahrer und/oder durch den elektrischen Antrieb 3 bereitgestellt wird, wird von einem Kettenblatt 4 am Kurbeltrieb 2 über eine Kette 5 auf ein Ritzel der Gangschaltung 6 übertragen.

Am Lenker des Fahrzeuges 1 ist ferner eine Steuereinheit 10 angeordnet, welche mit dem elektrischen Antrieb 3 verbunden ist. Im oder am Rahmen 12 ist ferner eine Batterie 11 ausgebildet, welche zur Stromversorgung des elektrischen Antriebes 3 dient.

Im Rahmen 12 integriert ist ein Kurbellager 13, welches auch als Tretlager bezeichnet wird und ein Kurbelgehäuse 14 und eine Kurbelwelle 15 aufweist.

Zusätzlich ist bei der Ausführungsform des erfindungsgemäßen Fahrzeugs 1 gemäß Figur 1 noch eine Ausführungsform des erfindungsgemäßen Fahrbetriebsunterstützungssystems 20 ausgebildet.

Bei dem in Figur 1 gezeigten Beispiel besteht das Fahrbetriebsunterstützungssystem 20 aus einer Generator-Motoreinheit 21, welche an oder im Bereich der Nabe 19-1 des Vorderrades 9-1 angebracht ist, um den Bewegungszustand und insbesondere die Drehung des Vorderrades 9-1 zu beeinflussen. Die Generator-Motoreinheit 21 ist über eine Steuerleitung 22 mit einer Steuereinrichtung 25 verbunden. Die Steuereinrichtung 25 des Fahrbetriebsunterstützungssystems 20 ist bei der Ausführungsform gemäß Figur 1 in der Steuereinheit 10 des Elektrofahrrades 1 integriert.

Dies ist jedoch nicht zwingend. Es kann vielmehr eine separate Steuereinrichtung 25 und auch unabhängig von dem Vorhandensein einer Steuereinheit 10 für einen elektrischen Antrieb 3 ausgebildet sein.

Beim erfindungsgemäßen Fahrzeug 1 gemäß Figur 1 ist zusätzlich noch ein Bremssystem 30 ausgebildet. Das Bremssystem 30 besteht aus zwei Teilen, nämlich einer Bremseinheit für das Vorderrad 9-1 und einer Bremseinheit für das Hinterrad 9-2. Die Bremseinheit für das Vorderrad 9-1 weist hier eine Bremsscheibe 31-1, ein Bremsmittel 32-1, eine Bremsleitung 33-1, die auch als Steuerleitung bezeichnet werden kann, sowie einen Bremshebel 34-1, der auch als Aktuator bezeichnet werden kann, auf. Alternativ können auch Felgenbremsen oder andere Konzepte zur Anwendung kommen.

Entsprechende Elemente sind im Zusammenhang mit dem Hinterrad 9-2 vorgesehen, nämlich eine Bremsscheibe 31-2, ein Bremsmittel 32-2, eine Bremsleitung 33-2, die auch als Steuerleitung bezeichnet werden kann, sowie einen Bremshebel 34-2, der auch als Aktuator bezeichnet werden kann. Auch hier sind andere Bremskonzepte denkbar.

Denkbar ist, dass das Bremssystem 30, das Fahrbetriebsunterstützungssystem 20 und/oder ggf. der elektrische Antrieb 3 zusammenwirkend über die Steuereinheit 10 und insbesondere über die Steuereinrichtung 25 miteinander betrieben werden, um die Fahrdynamik und/oder die Fahrsicherheit beim Betrieb des erfindungsgemäßen Fahrzeugs 1 besonders zuverlässig gewährleisten zu können.

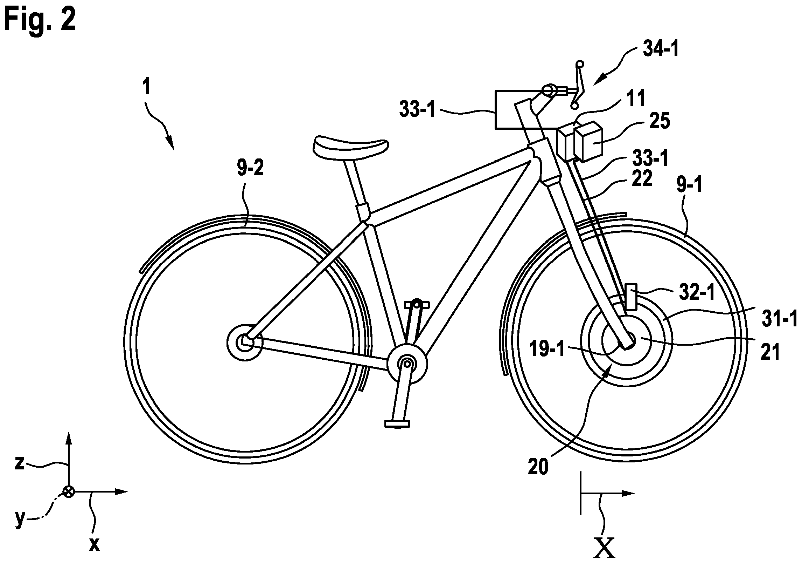

Die Figuren 2 bis 4 zeigen andere Ausführungsformen eines erfindungsgemäßen Fahrzeuges 1 nach Art eines Fahrrades, mit oder ohne elektrischem Antrieb 3 und unter Verwendung einer Ausführungsform des erfindungsgemäßen Fahrbetriebsunterstützungssystems 20.

Bei der Ausführungsform gemäß Figur 2 handelt es sich bei dem erfindungsgemäßen Fahrzeug 1 um ein Fahrrad ohne elektrischen Antrieb 3. Das Fahrzeug 1 gemäß Figur 2 wird also ausschließlich oder hauptsächlich über die Kurbeln 7, 8 und die Pedale 7-1, 8-1 mittels der Kette 5 über das Hinterrad 9-2 mittels Muskelkraft angetrieben. Am Vorderrad 9-1 ist neben der Bremseinheit mit Bremsscheibe 31-1, Bremsmittel 32-1, Bremsleitung 33-1 und Bremshebel 34-1 eine Ausführungsform des Fahrbetriebsunterstützungssystems 20 im Bereich der Nabe 19-1 des Rades 9-1 ausgebildet.

Das Fahrbetriebsunterstützungssystem 20 besteht bei der Ausführungsform gemäß Figur 2 aus der eigentlichen Generator-Motoreinheit 21 zur Beeinflussung der Drehung des Vorderrades 9-1 über die vordere Nabe 19-1, einer Steuerleitung 22 und einer Steuereinrichtung 25, über welche der Betrieb der Generator-Motoreinheit 21 einerseits und ggf. auch der Betrieb der Bremseinheit andererseits in kooperierender Art und Weise steuerbar sind.

Da bei der Ausführungsform gemäß Figur 2 kein Elektroantrieb mit einem eigenen Batteriepaket vorgesehen ist, muss zum Betrieb des Fahrbetriebsunterstützungssystems 20 eine eigene Batterie 11, vorzugsweise im Bereich der Steuereinrichtung 25 ausgebildet sein.

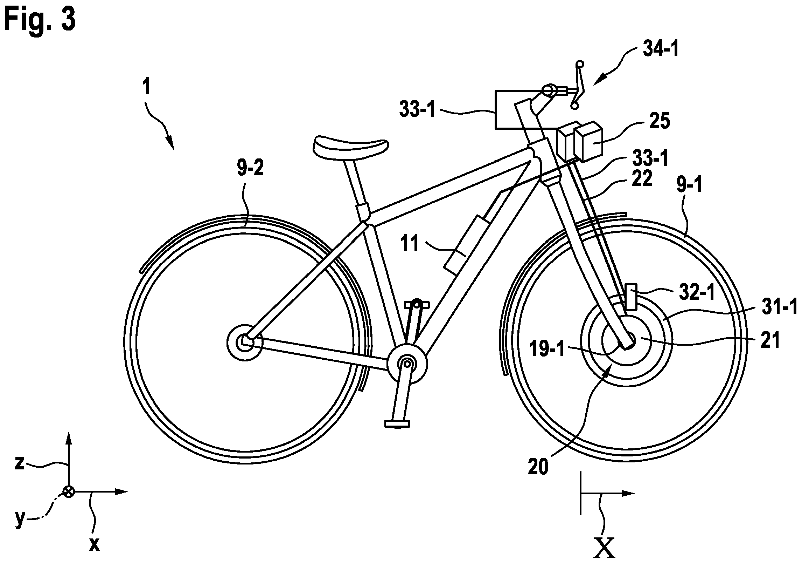

Bei der Ausführungsform gemäß Figur 3 ist im Gegensatz zur Ausführungsform gemäß Figur 2 bei dem erfindungsgemäßen Fahrzeug 1 und dem dort vorgesehenen Fahrbetriebsunterstützungssystem 20 eine zur Steuereinrichtung 25 des Fahrbetriebsunterstützungssystems 20 separat ausgebildete Batterie 11 am Rahmen 12 des Fahrzeuges 1 angeordnet. Ansonsten ist der Aufbau mit dem in Figur 2 Gezeigten identisch. Alternativ oder zusätzlich zur Batterie 11 ist auch eine permanente Rekuperation von Energie, z.B. nach Art eines Dynamos denkbar.

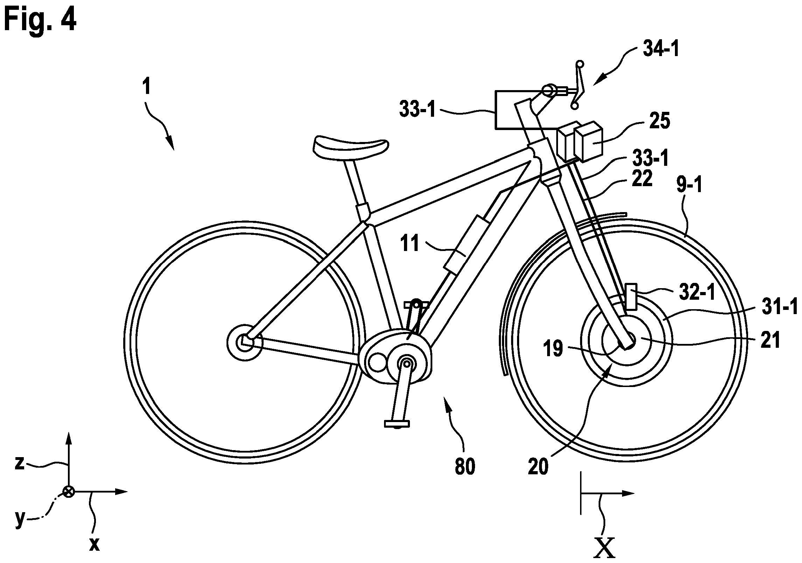

Bei der Ausführungsform des erfindungsgemäßen Fahrzeuges 1 gemäß Figur 4 ist ein zusätzlicher elektrischer Antrieb 3 im Sinne eines als Mittelmotor ausgebildeten Elektromotors vorgesehen, der über eine Batterie 11 gespeist wird. Die Batterie 11 zum Speisen des elektrischen Antriebes 3 wird bei der Ausführungsform gemäß Figur 4 auch dazu verwendet, das Fahrbetriebsunterstützungssystem 20 und insbesondere den Betrieb der Generator-Motoreinheit 21 und der Steuereinrichtung 25 zu gewährleisten.

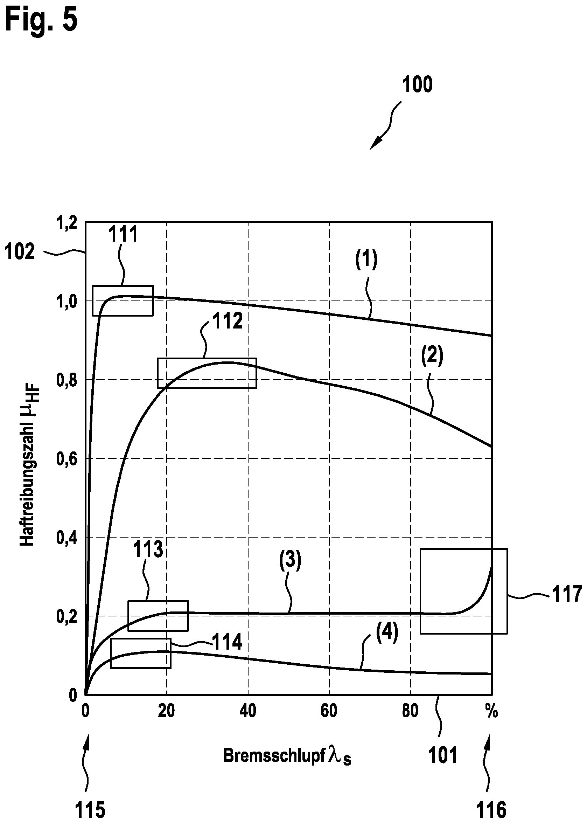

Figur 5 zeigt ein Diagramm 100 zur Veranschaulichung der verschiedenen Bereiche für eine ABS-Regelung unter verschiedenen Betriebsbedingungen.

Diese verschiedenen Betriebsbedingungen können Trockenheit, Nässe, Schnee und Glatteis betreffen und sind durch die Spuren (1) bis (4) dargestellt.

Auf der Abszisse 101 des Diagramms 100 ist dabei der Bremsschlupf $\lambda_B$ aufgetragen, auf der Ordinate 102 die Haftreibungszahl $\mu_{HF}$. Die Spuren (1) bis (4) geben die entsprechenden funktionalen Zusammenhänge zwischen Haftreibungszahl $\mu_{HF}$ und Bremsschlupf $\lambda_B$ an, wobei für den Bremsschlupf $\lambda_B$ noch der funktionale Zusammenhang

$$\lambda_B = \frac{v_F - v_U}{v_F}$$

gilt, bei welchem $V_F$ die Fahrzeuggeschwindigkeit und vu die Radgeschwindigkeit bezeichnen. Im Diagramm 100 sind auf der Abszisse 101 mit 115 und 116 noch die Extremfälle eines verschwindenden Schlupfes mit $\lambda_B =$ 0 % und eines maximalen Schlupfes mit $\lambda_B = 100$ % markiert.

Sämtliche Regelbereiche 111 bis 114 zu den Spuren (1) bis (4) zu Trockenheit, Nässe, Schnee und Glatteis können im Zusammenhang mit der Steuerung durch die Steuereinrichtung 25 bei Ausführungsformen des erfindungsgemäßen Fahrbetriebsunterstützungssystems 20 ganz oder teilweise abgedeckt werden, um Fahrdynamik einerseits und Fahrsicherheit andererseits für einen Fahrer des erfindungsgemäßen Fahrzeuges 1 zu gewährleisten.

Der Bereich 117 bezeichnet den Bereich einer anormalen Fahrsituation bei Ausbildung eines Schneekeiles.

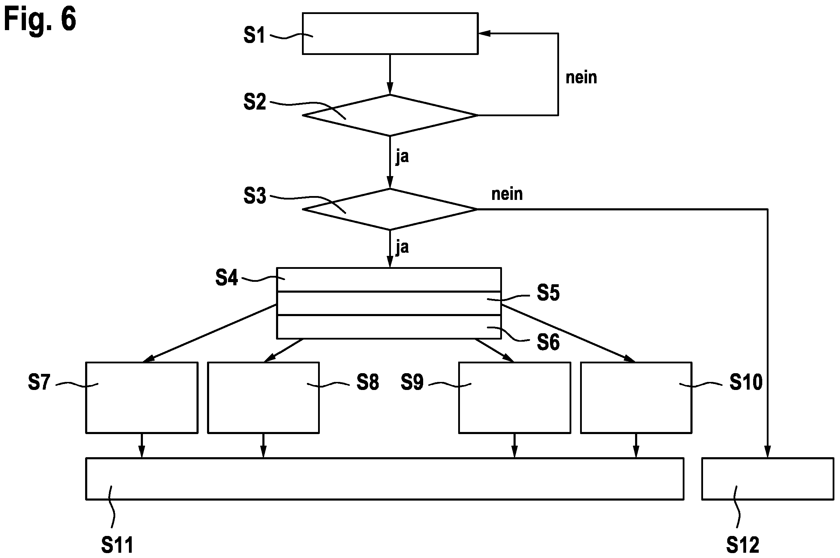

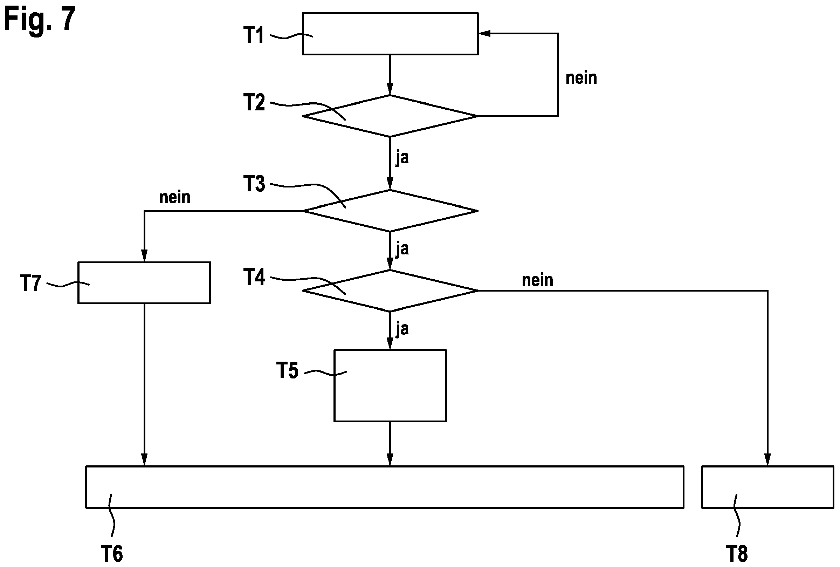

Die Figuren 6 und 7 zeigen Flussdiagramme zur Erläuterung entsprechender Steueralgorithmen, wie sie bei Ausführungsformen des erfindungsgemäßen Fahrbetriebsunterstützungssystems 20 im Zusammenhang mit der dort vorgesehenen Steuereinrichtung 25 zu Grunde gelegt werden können.

Dabei beschreibt Figur 6 Aspekte der Steuereinrichtung 25 im Zusammenhang mit einer erweiterten ABS-Funktionalität.

Im Schritt S1 erfolgt zunächst die Auswertung der Radgeschwindigkeit. Im Schritt S2 wird überprüft, ob eine Blockade des Vorderrades 9-1 droht und/oder ob eine Retardierung vorliegt, die so stark ist, dass ein Überschlag droht. Ist dies nicht der Fall, so kehrt der Vorgang zum Schritt S1 zurück. Droht dagegen eine Blockade des Vorderrades 9-1, so wird im Falle des Vorhandenseins und der Betriebsbereitschaft eines ABS-Systems im Schritt S4 mit dem Schritt S5 eine elektronische Regelung im Zusammenhang mit einer hydraulischen Regelung gemäß Schritt S6 bewirkt.

Dabei wird überprüft, ob das in Rede stehende Rad, hier also das Vorderrad 9-1 des Fahrzeuges 1, sich zu langsam bewegt, um in Bezug auf den Untergrund eine optimale Haftreibungszahl $\mu_{HF}$ zu besitzen, oder ob sich das Rad 9-1 für eine optimale Haftreibungszahl $\mu_{HF}$ zu schnell bewegt.

Bei einer zu langsamen Bewegung des Rades 9-1, ausgehend vom Schritt S6 im Zusammenhang mit der hydraulischen Regelung, wird der Bremsdruck durch den Fahrer im Schritt S8 reduziert. Erfindungsgemäß kann es in Zusammenhang mit dem Schritt S5 vorgesehen sein, dass im Schritt S7 kurzzeitig eine aktive Beschleunigung des Vorderrades 9-1 durch entsprechende Ansteuerung der Generator-Motoreinheit 21 erfolgt. Diese ist begrenzt durch das zur Verfügung stehende maximale Motormoment.

Im Ergebnis der Schritte S7 und S8 ergibt sich gemäß Schritt S11 ein Zustand des Vorderrades 9-1 des Fahrzeugs 1 in einem optimalen Bereich für die Haftreibungszahl $\mu_{HF}$. Eine Blockade des Vorderrades 9-1 wird verhindert.

Wird dagegen detektiert, dass das Vorderrad 9-1 für eine optimale Haftreibungszahl $\mu_{HF}$ zu schnell bewegt wird, so erfolgt im Zusammenhang mit dem Schritt S6 im Schritt S9 ein Durchlassen des vom Fahrer angeforderten Bremsdrucks. Um die Bremsaktion des Fahrers zu unterstützen, kann dann, ausgehend vom Schritt S5, in diesem Fall im Schritt S10 kurzzeitig ein elektrisches Bremsen durch Kurzschluss oder Rekuperation der kinetischen Energie durch entsprechende Ansteuerung der Generator-Motoreinheit 21 mit Generatorbetrieb ein zusätzliches Abbremsen des Rades 9-1 erfolgen. Auch in diesem Fall befindet sich dann im Schritt S11 das Rad 9-1 im optimalen Bereich der Haftreibungszahl $\mu_{HF}$ und eine Blockade wird vermieden.

Im Schema gemäß Figur 6 ist angedeutet, dass im Schritt S3 bei Abwesenheit oder Funktionsuntauglichkeit eines ABS-Regelsystems im Schritt S12 eine Blockade des Vorderrades 9-1 die Folge sein kann.

Figur 7 zeigt ebenfalls schematisch und in Form eines Diagramms einen Teil eines Steuerverfahrens, wie es in einer entsprechenden Steuereinrichtung 25 einer Ausführungsform des erfindungsgemäßen Fahrbetriebsunterstützungssystems 20 ausgebildet sein kann, um nämlich eine sogenannte RLM-Regelung zu bewirken, mit welcher ein Abheben des Hinterrades und damit ein Überschlag des Fahrzeugs verhindert werden.

Im initialen Schritt T1 werden zunächst die Werte der Radgeschwindigkeit und/oder entsprechende Inertial- oder Trägheitssensoren ausgewertet. Wird im Schritt T2 keine Gefahr eines RLM-Szenarios - also eines Szenarios mit Gefahr des An- oder Abhebens eines Hinterrades 9-2 - detektiert, so kehrt der Ablauf zum Schritt T1 zurück.

Wird dagegen im Schritt T2 die Gefahr eines RLM-Szenarios, also eine Situation detektiert, bei welcher die Gefahr des Abhebens des Hinterrads 9-2 besteht - wie etwa im Zusammenhang mit einem Bordstein, einer Kante, einer Wurzel oder einem anderen Hindernis - so wird im Schritt T3 überprüft, ob durch den Fahrer ein Bremsdruck erzeugt oder angefordert wurde. Ist dies nicht der Fall, so wird im Schritt T7 durch eine kurzzeitige Aktivierung der Generator-Motoreinheit 21 im Motorbetrieb eine Beschleunigung des Vorderrades 9-1 bewirkt, wodurch im Schritt T6 die Gefahr des Abhebens des Hinterrades 9-2 gemindert oder ausgeräumt ist.

Wird im Schritt T3 hingegen festgestellt, dass ein Bremsdruck durch den Fahrer erzeugt oder angefordert wird, so wird im Fall des Vorhandenseins und der Bereitschaft eines ABS-Systems gemäß Schritt T4 im Schritt T5 der vom Fahrer erzeugte oder angeforderte Bremsdruck durch das ABS-System reduziert, und zwar ggf. in Kombination mit einer aktiven Beschleunigung des Vorderrades 9-1 unter entsprechender kurzzeitiger Aktivierung der Generator-Motoreinheit 21 an der Nabe 19-1 des Vorderrades 9-1, und zwar analog zum Schritt T7 im Motorbetrieb der Einheit 21.

Ergibt sich im Schritt T4 dagegen, dass ein funktionsfähiges ABS-System nicht bereit steht, so kann mit dem Zustand gemäß dem Schritt T8 ohne Gegenmaßnahme ein Abheben des Hinterrades 9-2 die Folge sein.

Diese und weitere Merkmale und Eigenschaften der vorliegenden Erfindung werden an Hand der folgenden Darlegungen weiter erläutert:

Unter anderem sollen durch die Erfindung erweiterte Fahrdynamik-und/oder Steuerungsfunktionen durch einen elektrisch ansteuerbaren zusätzlichen Antrieb - ggf. als Bremse - am Fahrrad, Pedelec oder S-Pedelec geschaffen werden. Es sollen dabei ggf. auch entsprechende Bremsnormen eingehalten und/oder Allradfunktionen möglich werden.

Eine Idee ist dabei, eine erweiterte Fahrdynamikfunktionalität durch einen intelligent gesteuerten - ggf. zusätzlichen - Radnabenantrieb, also durch eine Generator-Motoreinheit 21 auszubilden, die auch als elektrische Bremse fungieren kann. Dies ist insbesondere an einem Fahrrad, Pedelec oder S-Pedelec möglich und bietet neben einer Antischlupfregelung ggf. auch eine erweiterte ABS-Regelung.

Neben einer zusätzlichen und steuerbaren Bremsmöglichkeit besteht insbesondere zusätzlich durch Antrieb auch die Möglichkeit, durch gezielte Beschleunigung und nicht nur durch Loslassen der Bremse während des Bremsvorgangs ein Rad zu stabilisieren.

Weitere Vorteile und Optionen können sich wie folgt ergeben:

Es kann eine erweiterte Fahrdynamikfunktionalität erreicht werden durch einen intelligent gesteuerten und ggf. zusätzlich Radnabenantrieb, der auch als elektrische Bremse fungieren kann.

Neben einer Antischlupfregelung ist auch eine erweiterte ABS-Regelung möglich. Grundsätzlich ergibt sich eine zusätzliche, steuerbare Bremsmöglichkeit, ggf. mit Energierückführung oder mit Rekuperationsoption.

Die Bremsmöglichkeit kann ggf. aber auch nur über einen Kurzschluss im Sinne eines Brakechopperbetriebs erfolgen, wodurch ein Erreichen gesetzlicher Anforderungen einfacher gestaltet wird. Entsprechend kann sich ein geringeres notwendiges Bremsflüssigkeitsvolumen im Hauptzylinder, im Reservoir usw. für eine ABS-Regelung einstellen.

Durch den zusätzlichen Antrieb besteht die Möglichkeit, durch gezielte Beschleunigung und nicht nur durch Loslassen der Bremse während des Bremsvorgangs ein Rad zu stabilisieren. Dies betrifft z.B. die Beschleunigung am Vorderrad, um ein Abheben des Hinterrads oder einen Haftungsverlust durch Blockade bei einem zu starken Bremsvorgang zu verhindern.

Ein typisches Pedelec mit Mittelmotor- oder mit Heckantrieb - ggf. mit ABS am Vorderrad - wird so durch einen zusätzlichen Antrieb im Vorderrad zum ABS-Allrad-Fahrzeug, ggf. mit Rekuperationsmöglichkeit.

Die als Nabenmotor wirkende Generator-Motor-Einheit 21 kann auch die Funktion eines Raddrehgeschwindigkeitssensors übernehmen. Auf diese Weise können sonstige Sensoren eingespart werden.

Bevorzugte Ausführungsformen:

Eine einfache Ausführung besteht darin, dass die Generator-Motoreinheit 21 nur als Bremse fungiert und Bremsenergie in Wärme umwandelt, z.B. durch Brakechopper- und Kurzschlussbetrieb mit Energiedissipation über Wandlung in Wärme. Hierfür ist keine Antriebsansteuerung notwendig, nur eine Ansteuerung der Kurzschlüsse. Kurze und ABS unterstützende Bremspulse sind ohne ein Überhitzen möglich.

Eine Stromversorgung des Steuergeräts kann wahlweise über die Generator-Motoreinheit 21 als Dynamo oder Generator oder über eine andere Energiequelle, z.B. eine Batterie 11, erfolgen. Diese Funktionalität ist auch bei ansonsten nicht elektrifizierten Fahrzeugen 1 verwendbar.

Die Generator-Motoreinheit 21 kann bei Bremsmanövern zusätzlich zur Rekuperation verwendet werden. Hierzu muss ein Akku 11 vorhanden sein, der aufgeladen werden kann. Damit sind auch längere Bremsunterstützungen möglich. Dieser Akku 11 kann vorteilhafterweise gleichzeitig als Energiequelle für das Steuergerät 20 dienen.

Die Generator-Motoreinheit 21 kann zusätzlich für erweiterte Fahrdynamikfunktionen verwendet werden, beispielsweise zur Beschleunigung eines Rades zur Unterstützung eines ABS/MSC-Schemas, z.B. mit Einstellung der Geschwindigkeit mit optimalem Reibwert zwischen Rad und Boden und/oder zur Unterstützung eines RLM-Konzepts. Bei einem System mit einem MSC-Schema (MSC : Motor Cycle Stability Control) kann die aktive Beschleunigung Situationen eines Schräglagen-ABS konsolidieren helfen.

Die Generator-Motoreinheit 21 kann zusätzlich als Fahrzeugantrieb, vorzugsweise mit Antissschlupfregelung, verwendet werden. Dazu sind eine entsprechende Antriebssteuerung und eine Energiequelle in Form einer Batterie 11 notwendig.

Neben der für ABS vorteilhaften Ausführung am Vorderrad 9-1 ist auch eine nicht beanspruchte Ausführung am Hinterrad 9-2 möglich. Alle bisherigen Ausführungsvarianten können durch einen zusätzlichen Antrieb 80 am anderen Rad 9-2 zu Allradantrieben ausgebaut werden.

Ein vorteilhaftes Ausführungsbeispiel bestünde in einem Elektroantrieb mit ABS/ASR usw. über eine Generator-Motoreinheit 21 am Vorderrad 9-1 in Kombination mit einem Heckantrieb 80 über einen Mittelmotor 3. Hier kann die Generator-Motoreinheit 21 vorteilhafterweise das ABS unterstützen. Auch das zusätzliche Gewicht auf das Vorderrad ist vorteilhaft.

In allen Ausführungsvarianten kann vorteilhafterweise der Bremsmotor als Raddrehzahlfühler verwendet werden, jedoch kann in allen Varianten auch ein zusätzlicher Raddrehzahlfühler fungieren.

Im Folgenden werden noch zusätzliche Aspekte für pumpenlose ABS-Systeme und für RLM-Systeme erörtert.

ABS-System

Es ist ein Ziel eines ABS-Systems, die Raddrehzahl so zu regeln, dass die Haftreibung zwischen Rad und Untergrund während des Bremsvorgangs maximal bleibt. Dies ist je nach Untergrund der Fall, wenn die Radgeschwindigkeit bei 70 % bis 90% der Fahrzeuggeschwindigkeit liegt, wie dies im Zusammenhang mit Figur 5 erläutert ist.

Bei herkömmlichen ABS-Systemen wird die Radgeschwindigkeit geregelt, indem ein vorhandener Fahrerbremsdruck reduziert bzw. wieder freigeschaltet wird.

Erfindungsgemäß kann die Radgeschwindigkeit jedoch auch durch aktive Beschleunigung durch eine Generator-Motoreinheit 21 in einer Nabe 19-1, 19-2 erhöht werden.

Zudem kann eine Generator-Motoreinheit 21 in der Nabe 19-1, 19-2 durch Kurzschluss oder Rekuperation zum kurzzeitigen Bremsen verwendet werden. Es kann also sowohl aktiv gebremst als auch aktiv beschleunigt werden. Es wird nicht mehr nur der Fahrerbremsdruck reduziert. Der Spielraum der ABS-Regelung wird dadurch erweitert.

Insbesondere hilft die Erfindung, den Einsatzbereich pumpenloser ABS-Systeme zu erweitern. Pumpenlose ABS-Systeme können bauartbedingt nur ein begrenztes Bremsflüssigkeitsvolumen aus dem Kreislauf nehmen, um den Fahrerbremsdruck zu reduzieren. Ist das Regelungsreservoir voll, kann nicht weiter Druck abgebaut werden. Das Regelungsreservoir kann auch nicht beliebig groß ausgelegt werden, weil der Bremshebelweg begrenzt ist und auch bei vollem Reservoir noch Druck aufbauen muss. Hier kann vorteilhaft die elektrische Bremse/Beschleunigung durch Inbetriebnahme einer Generator-Motoreinheit 21 hinzugenommen werden, um weiterhin regelfähig zu sein. Entsprechend schlank kann das hydraulische Regelungssystem ausgelegt werden.

Das Ablaufdiagramm dazu ist in Figur 6 dargestellt.

Zudem erlaubt das elektrische Bremsen eine hohe Dynamik, verbraucht keine Bremsbeläge und ist nicht abhängig von der Reibungskraft der Bremsbacken auf der Bremsscheibe.

Für die elektrische Bremsfunktion, die auch unabhängig von der aktiven Beschleunigung eingesetzt werden kann, ist nicht einmal eine Antriebssteuerung notwendig. Im Prinzip reicht eine Generator-Motoreinheit 21 als Nabendynamo mit steuerbarem Kurzschluss. Der Dynamo könnte an nicht elektrifizierten Rädern auch ein ABS-System versorgen, entsprechende Kurzzeitspeicher vorausgesetzt. Damit wäre auch ein batterieloser Einsatz eines ABS-Systems an einem normalen Fahrrad möglich.

Rear-Wheel-Lift-off-Mitigation (RLM)

Ein Abheben eines Hinterrades 9-2 kann vermieden werden, indem der Fahrerbremsdruck am Vorderrad 9-1 reduziert wird, das Fahrzeug 1 also nicht so stark abgebremst wird, wie vom Fahrer gewünscht. Dieser Ansatz setzt allerdings voraus, dass der Fahrer überhaupt bremst. Dies ist nicht immer der Fall. Die abrupte Verzögerung des Vorderrades 9-1 kann auch durch ein Hindernis, z.B. durch einen Bordstein, einen Stein oder eine Wurzel im Gelände hervorgerufen werden.

Im Fall eines pumpenlosen ABS-Systems ist wiederum die Regelbarkeit durch das Volumen des Reservoirs begrenzt.

Erfindungsgemäß kann die aktive Beschleunigung des Vorderrads 9-1 eingesetzt werden, um ein Abheben des Hinterrads 9-2 zu verhindern.

- Dabei kann ein kurzzeitiger, aktiver Antrieb des Vorderrades 9-1 helfen, einen Teil der Hindernisse zu überwinden, was sonst zu einem Überschlag geführt hätte. Hierzu ist kein ABS-Hydrauliksystem notwendig.

- Der Einsatzbereich der RLM-Funktionalität eines pumpenlosen ABS wird erweitert, ähnlich wie bei der Antiblockierfunktionalität. Speziell beim Fahrrad ist ein hoher Prozentsatz der schweren Unfälle mit einem Überschlag verbunden, weil der Schwerpunkt so hoch liegt. Daher kann eine RLM-Funktionalität bei Fahrrädern aller Art Unfälle vermeiden und Unfallfolgen mindern.

**Patentansprüche**

1. Fahrbetriebsunterstützungssystem (20) für ein mit Muskelkraft und/oder zusätzlich mit Motorkraft antreibbares Fahrzeug (1), wie ein Elektrofahrrad, eBike oder Pedelec, welches mindestens ein Vorderrad (9-1) und ein Hinterrad (9-2) sowie ein Bremssystem (30) zum Bremsen zumindest des Vorderrads (9-1) aufweist,

   mit einer steuerbaren elektrischen Generator-Motoreinheit (21),

   - welche an oder im Bereich einer Nabe (19-1) des Vorderrads (9-1) montierbar ist und
   - welche mit dem Vorderrad (9-1) und/oder mit einer Drehung des Vorderrads (9-1) derart koppelbar ist, dass dadurch die Drehung des Vorderrads (9-1) durch Bremsen und/oder Beschleunigen beeinflussbar ist,

- welche die Generator-Motoreinheit (21) durch das Vorderrad (9-1) derart steuert, dass dadurch in einem Generatorbetrieb Energie aus einer Drehung des Vorderrads (9-1) ausgekoppelt wird, als Bremse wirkt, eine Drehung des Vorderrads Rades (9-1) unterdrückt, deren Beschleunigung zu verhindert und/oder abbremst, wobei die Generator-Motoreinheit (21) unter Kurzschluss, insbesondere nach Art eines Brakechoppers, betreibbar ausgebildet ist, und
- welche das Vorderrad (9-1) derart ansteuert, dass dadurch die Generator-Motoreinheit (21) in einem Motorbetrieb Energie in eine Drehung des Vorderrads (9-1) einkoppelt, als Antrieb wirkt und eine Drehung des Vorderrads (9-1) in Gang setzt, aufrecht erhält und/oder beschleunigt,

wobei das Fahrbetriebsunterstützungssystem (20) eingerichtet ist, bei Detektion (T2) von Gefahr eines RLM-Szenarios und wenn ein Bremsdruck des zu Grunde liegenden Bremssystems (30) nicht erzeugt und/oder nicht angefordert wird (T3), die Generator-Motoreinheit (21) im Motorbetrieb zur Beschleunigung des Vorderrads (9-1) derart zu aktivieren (T7), dass dadurch die Gefahr des RLM-Szenarios gemindert oder ausgeräumt wird.

2. Fahrbetriebsunterstützungssystem (20) nach Anspruch 1, bei welchem die Generator-Motoreinheit (21) dazu betreibbar ist, ausgekoppelte Energie als rückgewonnene Energie bereitzustellen.

3. Fahrbetriebsunterstützungssystem (20) nach einem der vorangehenden Ansprüche, bei welchem die Generator-Motoreinheit (21) ausgebildet ist, eine Drehung des Vorderrads (9-1) so anzupassen, dass Werte

(i) der Radgeschwindigkeit ($v_v$) in Relation zu einer Fahrzeuggeschwindigkeit ($v_F$),
(ii) der Haftreibungszahl ($\mu_{HF}$) und/oder
(iii) des Bremsschlupfes ($\lambda_B$) des Vorderrads (9-1)

in einem jeweiligen vorbestimmten Werteintervall liegen, dass ein Blockieren des Vorderrads (9-1) vermieden wird und/oder dass ein Rutschen des Vorderrads (9-1) vermieden wird.

4. Fahrbetriebsunterstützungssystem (20) nach einem der vorangehenden Ansprüche, bei welchem eine Generator-Motoreinheit (21) ausgebildet ist und Mittel aufweist, eine Drehzahl des mit der Generator-Motoreinheit (21) gekoppelten Vorderrads (9-1) zu bestimmen.

5. Fahrbetriebsunterstützungssystem (20) nach einem der vorangehenden Ansprüche, mit einer Steuereinrichtung (25), welche zur Steuerung des Betriebs der Generator-Motoreinheit (21) ausgebildet ist, insbesondere nach Art oder als Teil einer ABS-, ASR- und/oder RLM-Regelung und/oder im Zusammenwirken mit einem Antrieb (80), mit dem Bremssystem (30) und/oder mit Sensoreinrichtungen des zu Grunde liegenden Fahrzeuges (1).

6. Mit Muskelkraft und/oder zusätzlich mit Motorkraft antreibbares Fahrzeug (1), wie ein Elektrofahrrad, eBike oder Pedelec, welches

- mindestens ein Vorderrad (9-1) und ein Hinterrad (9-2) sowie
- ein Fahrbetriebsunterstützungssystem (20) nach einem der Ansprüche 1 bis 7 aufweist.

7. Fahrzeug (1) nach Anspruch 6, bei welchem an oder im Bereich einer Nabe (19-1) des Vorderrads (9-1) eine steuerbare elektrische Generator-Motoreinheit (21) ausgebildet ist, welche mit dem Vorderrad (9-1) und/oder mit einer Drehung des Vorderrads (9-1) derart koppelbar ist, dass dadurch die Drehung des Vorderrads (9-1) durch Bremsen und/oder Beschleunigen beeinflussbar ist.

8. Fahrzeug (1) nach einem der Ansprüche 6 oder 7,

- bei welchem ein mit einer Generator-Motoreinheit (21) gekoppeltes Rad (9-2) ein Antriebsrad (9-2) des Fahrzeuges (1) ist, insbesondere ein Hinterrad (9-2),
- wobei insbesondere zwischen dem Antriebsrad (9-2) einerseits und der Generator-Motoreinheit (21) und einem Antrieb (3, 2, 6; 80) des Antriebsrades (9-2) andererseits eine gemeinsame Koppeleinrichtung ausgebildet ist zum gesteuerten Koppeln und Entkoppeln des Antriebsrades (9-2), der Generator-Motoreinheit (21) und des Antriebes (3, 2, 6; 80) des Antriebsrades (9-2).

9. Fahrzeug (1) nach einem der Ansprüche 6 bis 8, bei welchem das Fahrzeug (1) einen elektrischen Antrieb (3) aufweist, welcher ein Antriebsmoment des Fahrzeugs (1) bereit stellt, wobei der elektrische Antrieb (3) im Kurbeltrieb (2) des Fahrzeugs (1) integriert ist.

## Claims

1. Riding assistance system (20) for a vehicle (1) which is drivable by muscle power and/or additionally by motor power, such as an electric bicycle, e-bike or pedelec, which vehicle has at least one front wheel (9-1) and one rear wheel (9-2) and a brake system (30) for braking at least the front wheel (9-1), having a controllable electrical generator-motor unit (21),

- which is mountable on or in the region of a hub (19-1) of the front wheel (9-1), and
- which is couplable to the front wheel (9-1) and/or to a rotation of the front wheel (9-1) such that the rotation of the front wheel (9-1) can thus be influenced by braking and/or acceleration,
- which controls the generator-motor unit (21) by means of the front wheel (9-1) such that, in this way, in a generator mode, energy is coupled out of a rotation of the front wheel (9-1), acts as a brake, suppresses a rotation of the front wheel wheel (9-1), prevents and/or brakes the acceleration thereof,
wherein the generator-motor unit (21) is designed to be operable by short-circuiting, in particular in the manner of a brake chopper, and
- which actuates the front wheel (9-1) such that, in this way, the generator-motor unit (21), in a motor mode, couples energy into a rotation of the front wheel (9-1), acts as a drive and initiates, maintains and/or accelerates a rotation of the front wheel (9-1),

wherein the riding assistance system (20) is configured to, in the event of detection (T2) of a risk of an RLM scenario and if a brake pressure of the underlying brake system (30) is not generated and/or demanded (T3), activate (T7) the generator-motor unit (21) in the motor mode to accelerate the front wheel (9-1) such that the risk of the RLM scenario is thus alleviated or eliminated.

2. Riding assistance system (20) according to Claim 1, in which the generator-motor unit (21) is operable to provide coupled-out energy as recovered energy.

3. Riding assistance system (20) according to either of the preceding claims, in which the generator-motor unit (21) is designed to adapt a rotation of the front wheel (9-1) such that values

(i) of the wheel speed ($v_V$) in relation to a vehicle speed ($v_F$),
(ii) of the static friction coefficient ($\mu_{HF}$) and/or
(iii) of the brake slip ($\lambda_B$) of the front wheel (9-1)

lie in a respective predetermined value interval, that locking of the front wheel (9-1) is prevented and/or that slipping of the front wheel (9-1) is prevented.

4. Riding assistance system (20) according to any of the preceding claims, in which a generator-motor unit (21) is designed, and has means, to determine a rotational speed of the front wheel (9-1) coupled to the generator-motor unit (21).

5. Riding assistance system (20) according to any of the preceding claims, having a control device (25) which is designed for controlling the operation of the generator-motor unit (21), in particular in the manner or as part of ABS, ASR and/or RLM control and/or in interaction with a drive (80), with the brake system (30) and/or with sensor devices of the underlying vehicle (1).

6. Vehicle (1) which is drivable by muscle power and/or additionally by motor power, such as an electric bicycle, e-bike or pedelec, which vehicle has

- at least one front wheel (9-1) and one rear wheel (9-2), and
- a riding assistance system (20) according to any of Claims 1 to 7.

7. Vehicle (1) according to Claim 6, in which, on or in the region of a hub (19-1) of the front wheel (9-1), there is formed a controllable electrical generator-motor unit (21) which is couplable to the front wheel (9-1) and/or to a rotation of the front wheel (9-1) such that the rotation of the front wheel (9-1) can thus be influenced by braking and/or acceleration.

8. Vehicle (1) according to either of Claims 6 and 7,

- in which a wheel (9-2) coupled to a generator-motor unit (21) is a drive wheel (9-2) of the vehicle (1), in particular a rear wheel (9-2),
- wherein, in particular, a common coupling device is formed between the drive wheel (9-2), on the one hand, and the generator-motor unit (21) and a drive (3, 2, 6; 80) of the drive wheel (9-2), on the other hand, for the purposes of the controlled coupling and decoupling of the drive wheel (9-2), of the generator-motor unit (21) and of the drive (3, 2, 6; 80) of the drive wheel (9-2).

9. Vehicle (1) according to any of Claims 6 to 8, in which the vehicle (1) has an electric drive (3) which provides a drive torque of the vehicle (1), wherein the electric drive (3) is integrated in the crank mechanism (2) of the vehicle (1).

**Revendications**

1. Système d'assistance au régime de déplacement (20) pour un véhicule (1) pouvant être propulsé avec la force musculaire et/ou en plus avec une force de moteur, comme une bicyclette électrique, une bicyclette à assistance électrique ou un pédélec, lequel possède au moins une roue avant (9-1) et une roue arrière (9-2) ainsi qu'un système de freinage (30) destiné à freiner au moins la roue avant (9-1), comprenant une unité moteur-générateur (21) électrique commandable,

  - laquelle peut être montée sur ou dans la zone d'un moyeu (19-1) de la roue avant (9-1) et
  - laquelle peut être accouplée à la roue avant (9-1) et/ou avec une rotation de la roue avant (9-1) de telle sorte que la rotation de la roue avant (9-1) peut ainsi être influencée par le freinage et/ou l'accélération,
  - laquelle commande l'unité moteur-générateur (21) par la roue avant (9-1) de telle sorte que dans un fonctionnement en générateur, de l'énergie est ainsi extraite d'une rotation de la roue avant (9-1), agit en tant que frein, inhibe une rotation de la roue avant roue (9-1), empêche et/ou freine son accélération,
  l'unité moteur-générateur (21) étant configurée pour pouvoir fonctionner en court-circuit, notamment à la manière d'un hacheur de freinage, et
  - laquelle excite la roue avant (9-1) de telle sorte que l'unité moteur-générateur (21) dans un fonctionnement en moteur, injecte ainsi de l'énergie dans une rotation de la roue avant (9-1), agit en tant que mécanisme propulseur et engage une rotation de la roue avant (9-1), la maintient et/ou l'accélère,

le système d'assistance au régime de déplacement (20) étant conçu pour, lors de la détection (T2) du risque d'un scénario dit RLM et lorsqu'une pression de freinage du système de freinage (30) sous-jacent n'est pas générée et/ou n'est pas demandée (T3), activer (T7) l'unité moteur-générateur (21) en fonctionnement en moteur en vue d'accélérer la roue avant (9-1) de telle sorte que le risque de scénario RLM est ainsi réduit ou éliminé.

2. Système d'assistance au régime de déplacement (20) selon la revendication 1, avec lequel l'unité moteur-générateur (21) peut être mise en fonctionnement pour fournir l'énergie extraite en tant qu'énergie récupérée.

3. Système d'assistance au régime de déplacement (20) selon l'une des revendications précédentes, avec lequel l'unité moteur-générateur (21) est configurée pour adapter une rotation de la roue avant (9-1) de telle sorte que des valeurs

  (i) de la vitesse de roue ($v_V$) en relation avec une vitesse de véhicule ($v_F$),
  (ii) du coefficient d'adhérence ($\mu_{HF}$) et/ou
  (iii) du glissement au freinage ($\lambda_B$) de la roue avant (9-1)

se trouvent dans un intervalle de valeur respectivement prédéfini, qu'un blocage de la roue avant (9-1) soit évité et/ou qu'un patinage de la roue avant (9-1) soit évité.

4. Système d'assistance au régime de déplacement (20) selon l'une des revendications précédentes, avec lequel une unité moteur-générateur (21) est configurée et possède des moyens pour déterminer une vitesse de rotation de la roue avant (9-1) accouplée à l'unité moteur-générateur (21).

5. Système d'assistance au régime de déplacement (20) selon l'une des revendications précédentes, comprenant un dispositif de commande (25) qui est configuré pour commander le fonctionnement de l'unité moteur-générateur (21), notamment à la manière ou en tant que partie d'une régulation ABS, ASR et/ou RLM et/ou en coopération avec un mécanisme d'entraînement (80), avec le système de freinage (30) et/ou avec des dispositifs capteurs du véhicule (1) sous-jacent.

6. Véhicule (1) pouvant être propulsé avec la force musculaire et/ou en plus avec une force de moteur, comme une bicyclette électrique, une bicyclette à assistance électrique ou un pédélec, lequel possède

  - au moins une roue avant (9-1) et une roue arrière (9-2) ainsi
  - qu'un système d'assistance au régime de déplacement (20) selon l'une des revendications 1 à 7.

7. Véhicule (1) selon la revendication 6, avec lequel une unité moteur-générateur (21) électrique commandable est configurée sur ou dans la zone d'un moyeu (19-1) de la roue avant (9-1), laquelle peut être accouplée à la roue avant (9-1) et/ou avec une rotation de la roue avant (9-1) de telle sorte que la rotation de la roue avant (9-1) peut ainsi être influencée par le freinage et/ou l'accélération.

8. Véhicule (1) selon l'une des revendications 6 et 7,

  - avec lequel une roue (9-2) accouplée à l'unité moteur-générateur (21) est une roue motrice (9-2) du véhicule (1), notamment une roue arrière (9-2),
  - un dispositif d'accouplement commun étant configuré, notamment entre la roue motrice (9-2) d'une part et l'unité moteur-générateur (21) et un mécanisme d'entraînement (3, 2, 6 ; 80) de la roue motrice (9-2) d'autre part, pour un accouplement et un désaccouplement commandés de la roue motrice (9-2), de l'unité moteur-générateur (21) et du mécanisme d'entraînement (3, 2, 6 ; 80) de la roue motrice (9-2).

**9.** Véhicule (1) selon l'une des revendications 6 à 8, le véhicule (1) possédant un mécanisme de propulsion électrique (3) qui fournit un couple d'entraînement du véhicule (1), le mécanisme de propulsion électrique (3) étant intégré dans la transmission à manivelle (2) du véhicule (1).

**Fig. 1**

EP 3 219 598 B1

Fig. 2

# Fig. 3

EP 3 219 598 B1

**Fig. 4**

EP 3 219 598 B1

## Fig. 5

**Fig. 6**

EP 3 219 598 B1

**Fig. 7**

EP 3 219 598 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1020110082086